# EUROPEAN PATENT APPLICATION

(11) **EP 4 578 663 A1**
(43) Date of publication of application: **02.07.2025**
(21) Application number: 24215707.1
(22) Date of filing: 27.11.2024
(51) Int. Cl.: B60C 1/00, C08L 7/00

(54) **SIDE COMPONENT RUBBER COMPOSITION AND TIRE**

(30) Priority: 27.12.2023 JP 2023220942
(71) Applicant: SUMITOMO RUBBER INDUSTRIES, LTD., Kobe-shi, Hyogo 651-0072 (JP)
(72) Inventor: OMURA, Naoya, Kobe-shi, 651-0072 (JP)
(74) Representative: TBK

(57) **Abstract**

Provided are a side component rubber composition and a tire that are sustainable and have a high abrasion resistance upon the collision with a curb. The side component rubber composition contains: a rubber component including an isoprene-based rubber and at least one of polybutadiene rubber or styrene-butadiene rubber; carbon black including recycled carbon black; and a hydrazide compound, the side component rubber composition having a ratio (Cc/Ic) of an amount Cc (parts by mass) of the carbon black per 100 parts by mass of the rubber component to an amount Ic (% by mass) of the isoprene-based rubber based on 100% by mass of the rubber component of higher than 0.8.

## Description

### TECHNICAL FIELD

The present invention relates to side component rubber compositions and tires.

### BACKGROUND ART

Side components such as sidewalls largely flex during running of the tire and may suffer cracks or other problems (e.g., Patent Literature 1). Plausible causes of such problems are generation of damage due to insufficient fracture strength and the speed of crack growth, which are contradictory to the fuel economy of rubbers.

### CITATION LIST

### PATENT LITERATURE

Patent Literature 1: JP 2020-122108 A

### SUMMARY OF INVENTION

### TECHNICAL PROBLEM

The present invention aims to solve the problem and provide a side component rubber composition and a tire that are sustainable and have a high abrasion resistance upon the collision with a curb.

### SOLUTION TO PROBLEM

The present invention relates to a side component rubber composition, including: a rubber component including an isoprene-based rubber and at least one of polybutadiene rubber or styrene-butadiene rubber; carbon black including recycled carbon black; and a hydrazide compound,
the side component rubber composition having a ratio (Cc/Ic) of an amount Cc (parts by mass) of the carbon black per 100 parts by mass of the rubber component to an amount Ic (% by mass) of the isoprene-based rubber based on 100% by mass of the rubber component of higher than 0.8.

### ADVANTAGEOUS EFFECTS OF INVENTION

The side component rubber composition of the present invention includes: a rubber component including an isoprene-based rubber and at least one of polybutadiene rubber or styrene-butadiene rubber; carbon black including recycled carbon black; and a hydrazide compound, the side component rubber composition having a ratio (Cc/Ic) of an amount Cc (parts by mass) of the carbon black per 100 parts by mass of the rubber component to an amount Ic (% by mass) of the isoprene-based rubber based on 100% by mass of the rubber component of higher than 0.8.

### BRIEF DESCRIPTION OF DRAWINGS

FIG. 1 is a cross-sectional view showing a part of a pneumatic tire.
FIG. 2 is an enlarged cross-sectional view showing a tread and its vicinity of the tire in FIG. 1.

### DESCRIPTION OF EMBODIMENTS

The side component rubber composition includes a rubber component including an isoprene-based rubber and at least one of polybutadiene rubber or styrene-butadiene rubber, carbon black including recycled carbon black, and a hydrazide compound. The side component rubber composition has a ratio (Cc/Ic) of an amount Cc (parts by mass) of the carbon black per 100 parts by mass of the rubber component to an amount Ic (% by mass) of the isoprene-based rubber based on 100% by mass of the rubber component of higher than 0.8.

The mechanism of the advantageous effect of the side component rubber composition described above is not exactly clear, but it is presumably as follows.

Recycled carbon black is increasingly used to improve sustainability. However, since recycled carbon black has less surface functional groups, the use thereof may reduce strength.

This issue may be overcome by adding a hydrazide compound to reduce a decrease in the strength, whereby sustainability can be improved by the use of recycled carbon black.

Thus, presumably, the side component rubber composition has better abrasion resistance upon the collision with a curb while improving sustainability.

The side component rubber composition contains a rubber component including an isoprene-based rubber and at least one selected from the group consisting of polybutadiene rubber and styrene-butadiene rubber. The isoprene-based rubber, the polybutadiene rubber, and the styrene-butadiene rubber may each be used alone or in combination of two or more types thereof.

To better achieve the advantageous effect, the rubber component preferably includes an isoprene-based rubber, polybutadiene rubber, and styrene-butadiene rubber.

The mechanism of the enhancement of the advantageous effect provided by the presence of both polybutadiene rubber and styrene-butadiene rubber is not clear. Presumably, the use of both of the rubbers may reduce the occurrence of cracks and the like. Thus, presumably, the side component rubber composition has better abrasion resistance upon the collision with a curb while improving sustainability.

Herein, the rubber component contributes to cross-linking and generally corresponds to a polymer component which has a weight average molecular weight (Mw) of 10000 or more and which is not extractable with acetone. The rubber component is solid at room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, the BR preferably includes high-cis BR having a cis content of 90% by mass or higher. The cis content is more preferably 95% by mass or higher, still more preferably 97% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the formula: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The BR may be either unmodified or modified BR. Examples of the modified BR include those into which the functional groups listed for the modified rubbers have been introduced. The BR may also be hydrogenated polybutadiene polymers (hydrogenated BR).

Usable commercial products of the BR may be available from UBE Corporation, JSR Corporation, Asahi Kasei Corporation, Zeon Corporation, etc.

Any SBR may be used. Examples include emulsionpolymerized styrene-butadiene rubbers (E-SBR) and solutionpolymerized styrene-butadiene rubbers (S-SBR). Each of these may be used alone or in combinations of two or more thereof.

The styrene content of the SBR is preferably 5% by mass or higher, more preferably 20% by mass or higher, still more preferably 23.5% by mass or higher, further preferably 24% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by ¹H-NMR analysis.

When one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)).

The vinyl content of the SBR is preferably 3% by mass or higher, more preferably 10% by mass or higher, still more preferably 17% by mass or higher. The vinyl content is preferably 50% by mass or lower, more preferably 40% by mass or lower, still more preferably 30% by mass or lower. When the vinyl content is within the range indicated above, the advantageous effect tends to be better achieved.

Herein, the vinyl content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the equation: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified or modified SBR. Examples of the modified SBR include those into which the functional groups listed for the modified rubbers have been introduced. The SBR may also be hydrogenated styrene-butadiene copolymers (hydrogenated SBR).

The SBR may be a SBR product manufactured or sold by Sumitomo Chemical Co., Ltd., JSR Corporation, Asahi Kasei Corporation, Zeon Corporation, etc. or may be SBR synthesized by a known method.

The materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and /or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the materials (monomers) of synthetic rubbers such as IR, SBR, and BR may be derived from biomass. Herein, the term "biomass" refers to substances derived from natural resources such as plants. Non-limiting examples of biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the ¹⁴C content of a sample to the ¹⁴C content of a modern carbon standard (modern standard reference). This value is used as an index indicative of the biomass ratio of a compound. The following will describe what this value means.

One mole of carbon atoms (6.02 × 10²³ carbon atoms) includes about 6.02 × 10^{11 14}C atoms (about one trillionth of the number of normal carbon atoms). ¹⁴C is called a radioactive isotope and its half-life period is 5730 years and the number thereof regularly decreases. Decay of all the ¹⁴C atoms requires 226000 years. This means that in the fossil fuels, such as coal, petroleum, and natural gas, which are considered to be left for at least 226000 years after carbon dioxide and the like in the air were taken into and fixed in plants, etc., all the ¹⁴C atoms which had been contained in the plants etc. at the beginning of the fixation were decayed. Therefore, in the current 21st century, the fossil fuels, such as coal, petroleum, and natural gas, contain no ¹⁴C atoms. Thus, chemical materials prepared from such fossil fuel raw materials contain no ¹⁴C atoms either.

Meanwhile, ¹⁴C is unceasingly generated by nuclear reaction of cosmic rays in the air, and this generation balances with the ¹⁴C reduction due to radioactive decay. Thus, in the global atmosphere, the amount of ¹⁴C is constant. Then, the ¹⁴C content of materials derived from biomass resources which are circulating in the current environment is about 1 × 10⁻¹² mol% of the total of C atoms as described above. Therefore, a difference in the values can be used to calculate the biomass ratio of a compound.

The amount of ¹⁴C is generally determined as follows. ¹³C content (¹³C/¹²C) and ¹⁴C content (¹⁴C/¹²C) are determined by tandem accelerator-based mass spectrometry. In the determination, the ¹⁴C content of the natural carbon cycle at 1950 is used as a modern standard reference, that is, a standard ¹⁴C content. The particular standard substance used is an oxalic acid standard offered by the National Institute of Standards and Technology (NIST), United States. The specific radioactivity of carbon (intensity of radioactivity of ¹⁴C per gram of carbon) in the oxalic acid is corrected for carbon isotopic fractionation to a certain value for ¹³C, and is then corrected for decay between 1950 AD and the measurement date. This corrected value is taken as the standard ¹⁴C content (100%). The ratio between this value and the actual measurement value of a sample is defined as pMC.

Thus, a rubber 100% produced from materials derived from biomass is expected to have roughly about 110 pMC because, although there are some differences such as regional differences, currently such a material often fails to exhibit a value of 100 in usual conditions. On the other hand, the measured ¹⁴C content of chemical substances derived from fossil fuels, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

The amount of the isoprene-based rubber based on 100% by mass of the rubber component in the side component rubber composition is preferably 20% by mass or more, more preferably 40% by mass or more, still more preferably 50% by mass or more, while it is preferably 80% by mass or less, more preferably 70% by mass or less, still more preferably 60% by mass or less. When the amount is within the range indicated above, the advantageous effect tends to be better achieved.

The amount of BR, if present, in the side component rubber composition based on 100% by mass of the rubber component is preferably 20% by mass or more, more preferably 30% by mass or more, still more preferably 40% by mass or more, further preferably 45% by mass or more, while it is preferably 80% by mass or less, more preferably 60% by mass or less, still more preferably 50% by mass or less. When the amount is within the range indicated above, the advantageous effect tends to be better achieved.

The amount of SBR, if present, in the side component rubber composition based on 100% by mass of the rubber component is preferably 5% by mass or more, more preferably 20% by mass or more, still more preferably 30% by mass or more, further preferably 40% by mass or more, while it is preferably 80% by mass or less, more preferably 60% by mass or less, still more preferably 50% by mass or less. When the amount is within the range indicated above, the advantageous effect tends to be better achieved.

Examples of the rubber component other than isoprene-based rubbers, BR, and SBR include styrene-isoprene-butadiene rubber (SIBR), ethylene-propylene-diene rubber (EPDM), chloroprene rubber (CR), and acrylonitrilebutadiene rubber (NBR). Examples of the rubber component also include butyl-based rubbers and fluororubbers. Each of these may be used alone, or two or more of these may be used in combination.

The rubber component may be modified or hydrogenated. Rubbers extended with oils, resins, liquid rubber components, or the like are usable as well.

The side component rubber composition contains carbon black including recycled carbon black as a filler.

Examples of the recycled carbon black include recycled carbon black generated through pyrolysis of waste tires. Pyrolysis of waste tires may be performed by a known method, for example, pyrolysis at a temperature of 650°C or higher.

The nitrogen adsorption specific surface area (N₂SA) of the recycled carbon black is preferably 30 m²/g or more, more preferably 50 m²/g or more, still more preferably 65 m²/g or more. The N₂SA is preferably 150 m²/g or less, more preferably 120 m²/g or less, still more preferably 100 m²/g or less, particularly preferably 95 m²/g or less. When the N₂SA is within the range indicated above, the advantageous effect tends to be better achieved.

Herein, the nitrogen adsorption specific surface area of the carbon black may be determined in accordance with JIS K 6217-2:2001.

The recycled carbon black may be a commercial product, and examples of the commercial product include PB365 (trade name) available from Enrestec. PB365 is recycled carbon black that is generated through pyrolysis of waste tires and has an N₂SA of 76 m²/g. PB365 has an ash content of about 17% by mass.

The amount of the recycled carbon black per 100 parts by mass of the rubber component in the side component rubber composition is preferably 5 parts by mass or more, more preferably 30 parts by mass or more, still more preferably 50 parts by mass or more, while it is preferably 150 parts by mass or less, more preferably 100 parts by mass or less, still more preferably 90 parts by mass or less. When the amount is within the range indicated above, the advantageous effect tends to be better achieved.

The side component rubber composition may contain conventional carbon black other than the recycled carbon black.

Non-limiting examples of such carbon black include N134, N110, N220, N234, N219, N339, N330, N326, N351, N550, and N762. The material of the carbon black may be a biomass material such as lignin or a plant oil. The carbon black may be produced through combustion, for example, by the furnace method, through hydrothermal carbonization (HTC), or through thermal decomposition of methane, for example, by thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. Each of these may be used alone, or two or more of these may be used in combination.

The nitrogen adsorption specific surface area (N₂SA) of the carbon black is preferably 30 m²/g or more, more preferably 50 m²/g or more, still more preferably 70 m²/g or more. The N₂SA is preferably 200 m²/g or less, more preferably 150 m²/g or less, still more preferably 130 m²/g or less, particularly preferably 120 m²/g or less. When the N₂SA is within the range indicated above, the advantageous effect tends to be better achieved.

Herein, the nitrogen adsorption specific surface area of the carbon black may be determined in accordance with JIS K 6217-2:2001.

The amount of the carbon black (total amount of recycled carbon black and other carbon black) per 100 parts by mass of the rubber component in the side component rubber composition is preferably 5 parts by mass or more, more preferably 30 parts by mass or more, still more preferably 50 parts by mass or more, while it is preferably 150 parts by mass or less, more preferably 100 parts by mass or less, still more preferably 90 parts by mass or less. When the amount is within the range indicated above, the advantageous effect tends to be better achieved.

The side component rubber composition may contain a filler other than the recycled carbon black and conventional carbon black.

Such a filler is not limited and may be a material known in the rubber field. Examples include inorganic fillers such as silica, calcium carbonate, talc, alumina, clay, aluminum hydroxide, aluminum oxide, and mica; bio char; and hard-to-disperse fillers. To better achieve the advantageous effect, silica is preferred among these.

The mechanism of the enhancement of the advantageous effect provided by the presence of silica is not clear. Although the use of silica as a filler may reduce strength, the hydrazide compound can reduce a decrease in the strength. Thus, presumably, the side component rubber composition has better abrasion resistance upon the collision with a curb while improving sustainability.

Non-limiting examples of silica usable in the side component rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, etc.).

Amorphous silica extracted from husks may be commercially available from Wilmar, etc.

The amount of silica, if present, in the side component rubber composition per 100 parts by mass of the rubber component is preferably 5 parts by mass or more, more preferably 10 parts by mass or more, while it is preferably 150 parts by mass or less, more preferably 120 parts by mass or less, still more preferably 100 parts by mass or less. When the amount is within the range indicated above, the advantageous effect tends to be better achieved.

The nitrogen adsorption specific surface area (N₂SA) of the silica is preferably 50 m²/g or more, more preferably 70 m²/g or more, still more preferably 80 m²/g or more, further preferably 175 m²/g or more. The upper limit of the N₂SA of the silica is not limited, and it is preferably 350 m²/g or less, more preferably 300 m²/g or less, still more preferably 250 m²/g or less. When the N₂SA is within the range indicated above, the advantageous effect tends to be better achieved.

Here, the N₂SA of the silica is measured by a BET method in accordance with ASTM D3037-93.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 µm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of hard-to-disperse fillers, if present, in the side component rubber composition per 100 parts by mass of the rubber component is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The amount of the filler (total amount of fillers including recycled carbon black, conventional carbon black, and silica) per 100 parts by mass of the rubber component in the side component rubber composition is preferably 5 parts by mass or more, more preferably 30 parts by mass or more, still more preferably 50 parts by mass or more, while it is preferably 150 parts by mass or less, more preferably 100 parts by mass or less, still more preferably 90 parts by mass or less, further preferably 60 parts by mass or less. When the amount is within the range indicated above, the advantageous effect tends to be better achieved.

The side component rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. Each of these may be used alone, or two or more of these may be used in combination.

The amount of silane coupling agents per 100 parts by mass of the silica in the side component rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The side component rubber composition contains a hydrazide compound.

Herein, the term "hydrazide compound" refers to a compound having at least one group represented by -C(=O)-NH-.

A hydrazide compound may be used alone or in combination of two or more thereof.

To better achieve the advantageous effect, the hydrazide compound is desirably a compound represented by the following formula (1): 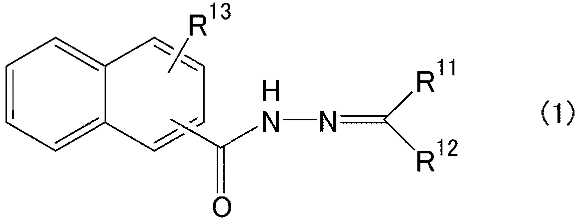 wherein R¹¹ and R¹² each independently represent a hydrogen atom or a monovalent hydrocarbon group, and R¹³ represents a hydroxyl group or a halogen group.

In the formula (1), the monovalent hydrocarbon group as R¹¹ or R¹² may be linear, branched, or cyclic and optionally has a substituent. The number of carbon atoms of the monovalent hydrocarbon group excluding the carbon atoms of the substituent is preferably 1 or more, while it is preferably 10 or less, more preferably 8 or less, still more preferably 4 or less. Examples of the monovalent hydrocarbon group include an alkyl group and an alkenyl group.

Specific examples of the monovalent hydrocarbon group as R¹¹ or R¹² in the formula (1) include a methyl group, an ethyl group, an n-propyl group, an isopropyl group, an n-butyl group, an isobutyl group, a tert-butyl group, an n-pentyl group, an isoamyl group, a 2-ethylbutyl group, an n-hexyl group, a cyclohexyl group, an n-heptyl group, a cyclohexylmethyl group, a cyclohexylethyl group, an n-octyl group, a 2-ethylhexyl group, a 3-n-propylheptyl group, an adamantyl group, an n-decyl group, a 3,7-dimethyloctyl group, and a 2-ethyloctyl group.

Of these, a methyl group, an ethyl group, an n-propyl group, an isopropyl group, an n-butyl group, an isobutyl group, or a tert-butyl group is preferred, and a methyl group, an ethyl group, an n-propyl group, or an isobutyl group is more preferred.

Examples of the halogen group as R¹³ in the formula (1) include -F and -Br.

To better achieve the advantageous effect, the compound represented by the formula (1) is preferably a compound represented by the following formula (1-1): 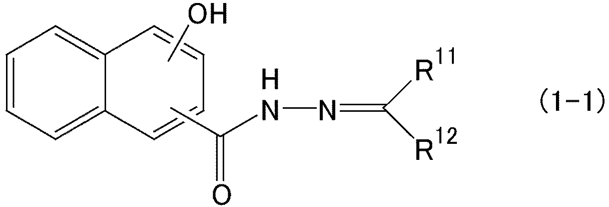 wherein R¹¹ and R¹² each independently represent a hydrogen atom or a monovalent hydrocarbon group.

The mechanism of the enhancement of the advantageous effect provided by the presence of a compound represented by the formula (1-1) is not clear. Presumably, the compound can suitably reduce a decrease in strength due to the use of recycled carbon black. Thus, presumably, the side component rubber composition has better abrasion resistance upon the collision with a curb while improving sustainability.

Examples of the monovalent hydrocarbon group as R¹¹ or R¹² in the formula (1-1) include the groups listed for the R¹¹ or R¹² above.

The amount of the hydrazide compound (total amount of the compound represented by the formula (1) and other hydrazide compounds) per 100 parts by mass of the rubber component in the side component rubber composition is preferably 0.5 parts by mass or more, more preferably 1.5 parts by mass or more, still more preferably 2.0 parts by mass or more, while it is preferably 10.0 parts by mass or less, more preferably 7.0 parts by mass or less, still more preferably 5.0 parts by mass or less. When the amount is within the range indicated above, the advantageous effect tends to be better achieved.

The amount of the compound represented by the formula (1) per 100 parts by mass of the rubber component in the side component rubber composition is preferably 0.5 parts by mass or more, more preferably 1.5 parts by mass or more, still more preferably 2.0 parts by mass or more, while it is preferably 10.0 parts by mass or less, more preferably 7.0 parts by mass or less, still more preferably 5.0 parts by mass or less. When the amount is within the range indicated above, the advantageous effect tends to be better achieved.

The amount of the compound represented by the formula (1-1) per 100 parts by mass of the rubber component in the side component rubber composition is preferably 0.5 parts by mass or more, more preferably 1.5 parts by mass or more, still more preferably 2.0 parts by mass or more, while it is preferably 10.0 parts by mass or less, more preferably 7.0 parts by mass or less, still more preferably 5.0 parts by mass or less. When the amount is within the range indicated above, the advantageous effect tends to be better achieved.

The side component rubber composition may contain a plasticizer.

Herein, the term "plasticizer" refers to a material that imparts plasticity to rubber components and conceptually includes both liquid plasticizers that are liquid at 25°C and solid plasticizers that are solid at 25°C. Examples of the plasticizer include resin components, oils, liquid polymers, and ester plasticizers. These plasticizers may be derived from mineral resources such as petroleum or natural gas, from biomass, or from naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Specific examples of the plasticizer include oils, liquid polymers, and resins. Each of these may be used alone, or two or more of these may be used in combination.

Examples of the oils include mineral oils, plant oils, and animal oils. In view of life cycle assessment, oils obtained by purifying waste oils used in rubber mixing machines or engines or waste cooking oils used in cooking establishments may be used.

Herein, the term "mineral oils" refers to oils derived from mineral resources such as petroleum or natural gas. Examples of mineral oils include paraffinic process oils (mineral oils), naphthenic process oils, and aromatic process oils. Specific examples of mineral oils include mild extracted solvates (MES), distillate aromatic extracts (DAE), treated distillate aromatic extracts (TDAE), treated residual aromatic extracts (TRAE), and residual aromatic extracts (RAE). For environmental protection, oils with a low polycyclic aromatic compound (PCA) content may be used. Examples of the oils with a low PCA content include MES, TDAE, and heavy naphthenic oils.

Herein, examples of plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at 25°C. Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at 25°C.

Whether a rubber composition contains the acylglycerol may be examined by any method such as ¹H-NMR analysis. For example, a rubber composition containing triacylglycerol is immersed in deuterium chloroform at 25°C for 24 hours. After removing the rubber composition, the ¹H-NMR is measured at room temperature. Signals observed at around 5.26 ppm, around 4.28 ppm, and around 4.15 ppm, each referenced to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of ± 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, etc. to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, etc.

Examples of the liquid polymers include liquid diene polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably 1.0 × 10³ to 5.0 × 10⁴, more preferably 3.0 × 10³ to 1.5 × 10⁴ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins that are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effect tends to be better achieved.

The softening point of the resins that are liquid at room temperature is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., etc.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

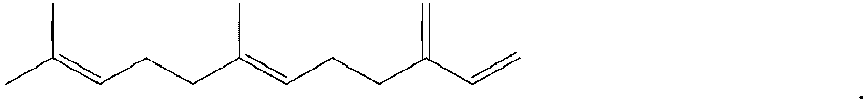

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tertbutoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at room temperature (25°C) may be used. Of these, liquid farnesene polymers that are liquid at room temperature (25°C) are desirable.

The amount of the plasticizer (total amount of plasticizers) per 100 parts by mass of the rubber component in the side component rubber composition is preferably 1 part by mass or more, more preferably 3 parts by mass or more, still more preferably 5 parts by mass or more. The upper limit is preferably 60 parts by mass or less, more preferably 40 parts by mass or less, still more preferably 35 parts by mass or less. When the amount is within the range indicated above, the advantageous effect tends to be better achieved.

The amount of plasticizers includes the amount of oils or resins contained in oil-extended rubbers or resin-extended rubbers.

The amount of solid plasticizers that are solid at room temperature (25°C) per 100 parts by mass of the rubber component in the side component rubber composition is preferably 1 part by mass or more, more preferably 3 parts by mass or more, still more preferably 5 parts by mass or more. The upper limit is preferably 20 parts by mass or less, more preferably 15 parts by mass or less, still more preferably 10 parts by mass or less. When the amount is within the range indicated above, the advantageous effect tends to be better achieved.

The amount of the resins that are solid at room temperature (25°C) per 100 parts by mass of the rubber component in the side component rubber composition is preferably 1 part by mass or more, more preferably 3 parts by mass or more, still more preferably 5 parts by mass or more. The upper limit is preferably 20 parts by mass or less, more preferably 15 parts by mass or less, still more preferably 10 parts by mass or less. When the amount is within the range indicated above, the advantageous effect tends to be better achieved.

The amount of liquid plasticizers that are liquid at room temperature (25°C) per 100 parts by mass of the rubber component in the side component rubber composition is preferably 1 part by mass or more, more preferably 3 parts by mass or more, still more preferably 5 parts by mass or more. The upper limit is preferably 50 parts by mass or less, more preferably 30 parts by mass or less, still more preferably 25 parts by mass or less. When the amount is within the range indicated above, the advantageous effect tends to be better achieved.

The amount of the liquid plasticizer includes the amount of oils in oil-extended rubbers and the amount of liquid resins in resin-extended rubbers extended with liquid resins.

The amount of oils per 100 parts by mass of the rubber component in the side component rubber composition is preferably 1 part by mass or more, more preferably 3 parts by mass or more, still more preferably 5 parts by mass or more. The upper limit is preferably 50 parts by mass or less, more preferably 30 parts by mass or less, still more preferably 25 parts by mass or less. When the amount is within the range indicated above, the advantageous effect tends to be better achieved.

The amount of oils includes the amount of oils in oil-extended rubbers.

The side component rubber composition may further contain vulcanized rubber particles.

The term "vulcanized rubber particles" refers to particles made of vulcanized rubber. Examples of usable vulcanized rubber particles include rubber powder stipulated in JIS K 6316:2017. From the perspective of environmental considerations and cost, recycled rubber powder produced from pulverized waste tires or the like is preferred. Each of these may be used alone, or two or more of these may be used in combination.

The vulcanized rubber particles are not limited and may be unmodified vulcanized rubber particles or modified vulcanized rubber particles.

Examples of usable commercial products of vulcanized rubber particles include those available from Lehigh, Muraoka Rubber Reclaiming Co., Ltd, etc.

The amount of vulcanized rubber particles per 100 parts by mass of the rubber component in the side component rubber composition is preferably 5 parts by mass or more, more preferably 7 parts by mass or more, still more preferably 10 parts by mass or more, while it is preferably 30 parts by mass or less, more preferably 20 parts by mass or less, still more preferably 15 parts by mass or less. When the amount is within the range indicated above, the advantageous effect tends to be better achieved.

In view of crack resistance, ozone resistance, etc., the side component rubber composition preferably contains an antioxidant.

Non-limiting examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component in the side component rubber composition is preferably 0.2 parts by mass or more, more preferably 2.0 parts by mass or more, still more preferably 2.5 parts by mass or more, further preferably 3.4 parts by mass or more. The amount is preferably 10.0 parts by mass or less, more preferably 6.0 parts by mass or less.

The side component rubber composition preferably contains stearic acid.

The amount of stearic acid per 100 parts by mass of the rubber component in the side component rubber composition is preferably 0.5 parts by mass or more, more preferably 1.5 parts by mass or more, still more preferably 2.0 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The side component rubber composition preferably contains zinc oxide.

The amount of zinc oxide per 100 parts by mass of the rubber component in the side component rubber composition is preferably 0.5 parts by mass or more, more preferably 1.5 parts by mass or more, still more preferably 2.0 parts by mass or more, while it is preferably 6.0 parts by mass or less, more preferably 4.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The side component rubber composition may contain wax.

The amount of wax per 100 parts by mass of the rubber component in the side component rubber composition is preferably 0.5 parts by mass or more, more preferably 1.6 parts by mass or more, still more preferably 2.0 parts by mass or more, while it is preferably 8.0 parts by mass or less, more preferably 5.0 parts by mass or less.

The wax is not limited. Any wax usually used in the tire industry may be suitably used. Examples include mineral wax and plant-derived wax. The term "mineral wax" refers to wax derived from mineral resources such as petroleum or natural gas. The term "plant-derived wax" refers to wax derived from natural resources such as plants. Mineral wax is preferred among these. Examples of plant-derived wax include rice wax, carnauba wax, and candelilla wax. Examples of mineral wax include paraffin wax and microcrystalline wax as well as selected special wax thereof. Paraffin wax is preferred. According to the present embodiments, wax does not include stearic acid. Usable commercial products of wax are available from Ouchi Shinko Chemical Industrial Co., Ltd., Nippon Seiro Co., Ltd., Paramelt, etc. Each wax may be used alone, or two or more of these may be used in combination.

The side component rubber composition preferably contains sulfur in order to moderately crosslink the polymer chains to obtain good properties.

The amount of sulfur per 100 parts by mass of the rubber component in the side component rubber composition is 1.0 parts by mass or more, preferably 1.5 parts by mass or more, more preferably 2.0 parts by mass or more. The amount of sulfur is preferably 7.0 parts by mass or less, more preferably 5.0 parts by mass or less, still more preferably 4.0 parts by mass or less. When the amount is within the range indicated above, the advantageous effect tends to be better achieved.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. Each of these may be used alone, or two or more of these may be used in combination.

The side component rubber composition preferably contains vulcanization accelerators.

The amount of vulcanization accelerators in the side component rubber composition is not limited and may be freely determined according to the desired curing rate and cross-link density. Still, the amount per 100 parts by mass of the rubber component is preferably 0.5 parts by mass or more, more preferably 0.8 parts by mass or more, still more preferably 1.0 parts by mass or more. The upper limit is preferably 8.0 parts by mass or less, more preferably 6.0 parts by mass or less, still more preferably 5.0 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the side component rubber composition may appropriately contain agents commonly used in the tire industry such as releasing agents or other materials.

The side component rubber composition has a ratio (Cc/Ic) of the amount Cc (parts by mass) of the carbon black per 100 parts by mass of the rubber component to the amount Ic (% by mass) of the isoprene-based rubber based on 100% by mass of the rubber component of higher than 0.80.

The ratio Cc/Ic is preferably higher than 0.85, more preferably higher than 0.90, still more preferably higher than 0.95, further preferably 1.00 or higher, while it is preferably lower than 3.00, more preferably lower than 2.50, still more preferably lower than 2.00. When the ratio Cc/Ic is within the range indicated above, the advantageous effect tends to be better achieved.

The side component rubber composition desirably has a ratio (Cc/Hc) of the amount Cc (parts by mass) of the carbon black per 100 parts by mass of the rubber component to the amount Hc (parts by mass) of the hydrazide compound per 100 parts by mass of the rubber component of 12.5 or higher and 100 or lower.

The ratio Cc/Hc is preferably 17.5 or higher, more preferably 22.5 or higher, still more preferably 25.0 or higher, while it is preferably 50.0 or lower, more preferably 40.0 or lower, still more preferably 35.0 or lower.

When the ratio Cc/Hc is within the range indicated above, the advantageous effect tends to be better achieved.

The mechanism of the enhancement of the advantageous effect provided by controlling the ratio Cc/Hc to be 12.5 or higher and 100 or lower is not clear. Although the use of recycled carbon black may reduce strength, the hydrazide compound can suitably reduce a decrease in the strength. Thus, presumably, the side component rubber composition has better abrasion resistance upon the collision with a curb while improving sustainability.

Herein, various materials containing carbon atoms (for example, rubbers, oils, resins, vulcanization accelerators, antioxidants, surfactants, etc.) may be derived from carbon dioxide in the air. The materials may be obtained from carbon dioxide by directly converting carbon dioxide or by synthesizing methane from carbon dioxide through methanation and then converting the methane.

The side component rubber composition can be produced by, for example, kneading the above-described components using a rubber mixing machine such as an open roll mill or a Banbury mixer and then, for example, cross-linking the kneaded mixture to obtain a cross-linked rubber composition.

The kneading conditions are as follows. In a base kneading step of kneading additives other than vulcanizing agents and vulcanization accelerators, the kneading temperature is usually 50°C to 200°C, preferably 80°C to 190°C. The duration of the kneading is usually 30 seconds to 30 minutes, preferably 1 minute to 30 minutes. In a final kneading step of kneading vulcanizing agents, vulcanization accelerators, and the like, the kneading temperature is usually 100°C or lower, preferably room temperature to 80°C. The composition obtained after kneading vulcanizing agents and vulcanization accelerators is usually vulcanized by press vulcanization, for example. The vulcanization temperature is usually 120°C to 200°C, preferably 140°C to 180°C.

The side component rubber composition is for use in a side component of a tire.

Herein, the term "side component" refers to a component that is located outwardly of a tread portion in the tire axis direction and defines the outermost surface of the tire. Specific examples include a sidewall and a clinch.

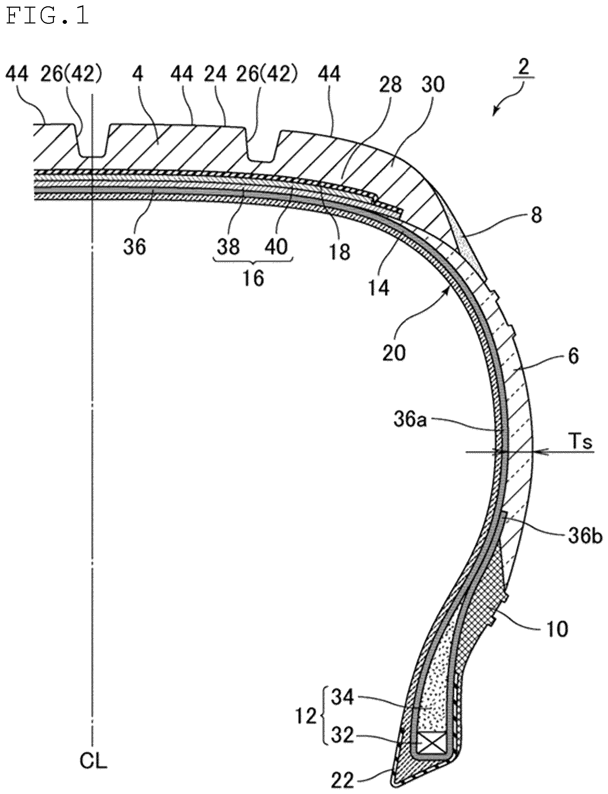

A sidewall is a component located outside a carcass and extending from a shoulder portion to a bead portion. Specifically, it is a component shown in, for example, FIG. 1 of JP 2005-280612 A or FIG. 1 of JP 2000-185529 A.

A clinch is a rubber portion located at a lower part of a sidewall and covering a portion to be in contact with a rim, and is also called a clinch apex or a rubber chafer. Specifically, it is a component shown in, for example, FIG. 1 of JP 2008-75066 A.

To better achieve the advantageous effect, the side component rubber composition is desirably for use in a sidewall.

The tire is produced using the side component rubber composition by usual methods. Specifically, the rubber composition containing necessary additives before cross-linking or vulcanization is extruded and processed into the shape of a side component such as a sidewall and then molded on a tire building machine by usual methods. The resulting side component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, etc.

In a tire that includes a side component including the side component rubber composition, the side component has a largest thickness T (mm).

Herein, the largest thickness T of a side component means the largest thickness of a rubber layer constituting the side component. The thicknesses of a side component at points on the outer surface of the tire are measured at the points along the normal of the side component defining the outer surface of the tire. The largest thickness T of the side component is the largest value among the thicknesses at the points. The largest thickness T of a side component including two or more rubber layers refers to the largest total thickness of the two or more rubber layers.

In the tire, the largest thickness T (mm) of the side component is preferably 2.0 mm or more, more preferably 2.5 mm or more, still more preferably 2.8 mm or more, particularly preferably 3.0 mm or more. The upper limit is preferably 20.0 mm or less, more preferably 15.0 mm or less, still more preferably 10.0 mm or less, particularly preferably 5.0 mm or less. When the largest thickness T is within the range indicated above, the advantageous effect tends to be better achieved.

The mechanism of the enhancement of the advantageous effect provided by controlling the largest thickness T of the side component to be within a predetermined range is not clear. Presumably, with the largest thickness of the side component controlled within a predetermined range, the rubber strength may reliably be obtained. Thus, presumably, the side component rubber composition has better abrasion resistance upon the collision with a curb while improving sustainability.

The side component, which is a sidewall, has a predetermined largest thickness Ts (mm).

Herein, the largest thickness Ts of a sidewall means the largest value of the thickness of the sidewall. The thicknesses of a sidewall at points on the outer surface of the tire are measured at the points along the normal of the sidewall defining the outer surface of the tire. The largest thickness Ts of the sidewall is the largest value among the thicknesses at the points.

In the tire, the largest thickness Ts (mm) of the sidewall is preferably 2.0 mm or more, more preferably 2.5 mm or more, still more preferably 2.8 mm or more, particularly preferably 3.0 mm or more. The upper limit is preferably 20.0 mm or less, more preferably 6.0 mm or less, still more preferably 5.0 mm or less, particularly preferably 4.0 mm or less. When the largest thickness Ts is within the range indicated above, the advantageous effect tends to be better achieved.

Herein, the dimensions such as thickness are measured in the normal state. Herein, the term "normal state" refers to a state where the tire is mounted on a normal rim, inflated to a normal internal pressure, and under no load. The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, such a referenced standard will be followed. For a tire which is not defined by any of the standards, the normal rim refers to a rim with the smallest diameter and, secondly, the narrowest width among the rims on which the tire can be mounted and can maintain the internal pressure, i.e., the rims that cause no air leakage between the rim and the tire. The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. JATMA, ETRTO, and TRA will be referenced in that order, and if the referenced standard includes the applicable size, such a referenced standard will be followed. Moreover, for a tire which is not defined by any of the standards, the normal internal pressure refers to a normal internal pressure of 250 kPa or more for another tire size defined by any of the standards, for which the normal rim is listed as the standard rim. Here, when a plurality of normal internal pressures of 250 kPa or more are listed, the normal internal pressure refers to the smallest one of these normal internal pressures.

The tire preferably has a product of (Hc × T) of the amount Hc (parts by mass) of the hydrazide compound per 100 parts by mass of the rubber component contained in the side component rubber composition in the side component and the largest thickness T (mm) of the side component of 1.0 or more and 200 or less.

The product of Hc × T is preferably 3.0 or more, more preferably 5.0 or more, still more preferably 6.0 or more, further preferably 7.5 or more, still further preferably 10.0 or more. The upper limit of the product of Hc × T is not limited and is preferably 150 or less, more preferably 100 or less, still more preferably 70 or less, further preferably 50 or less, still further preferably 15 or less, particularly preferably 12 or less. When the product of Hc × T is within the range indicated above, the advantageous effect tends to be better achieved.

The mechanism of the enhancement of the advantageous effect provided by controlling the product of Hc × T to be a predetermine value is not clear. Presumably, the largest thickness of the side component controlled to be within a predetermined range leads to good rubber strength, and also the hydrazide compound can reduce a decrease in the strength. Thus, presumably, the side component rubber composition has better abrasion resistance upon the collision with a curb while improving sustainability.

The tire preferably has a product of (Hc × Ts) of the amount Hc (parts by mass) of the hydrazide compound per 100 parts by mass of the rubber component contained in the sidewall rubber composition in the sidewall and the largest thickness Ts (mm) of the sidewall of 1.0 or more and 60 or less.

The product of Hc × Ts is preferably 3.0 or more, more preferably 5.0 or more, still more preferably 6.0 or more, further preferably 7.5 or more, still further preferably 10.0 or more. The upper limit of the product of Hc × Ts is not limited and is preferably 50 or less, more preferably 40 or less, still more preferably 30 or less, further preferably 15 or less, particularly preferably 12 or less. When the product of Hc × Ts is within the range indicated above, the advantageous effect tends to be better achieved.

The tire that includes the side component including the side component rubber composition has a predetermined tread groove depth.

The term "tread groove depth" refers to a distance in the tire axis direction to the deepest part of the bottom of a groove among grooves that extend in prescribed directions to define various tread patterns formed to section the surface of the tread of a vulcanized tire.

Herein, the tread groove depth D is the depth of a circumferential groove measured along the normal of a face that is extended from the ground contact face of the outermost surface of the tread and refers to a distance from the face extended from the ground contact face to the bottom of the deepest groove, specifically, the largest distance among the groove depths of existing circumferential grooves.

In the tire, the groove depth D (mm) of a circumferential groove on the tread is preferably 5.0 mm or more, more preferably 6.0 mm or more, still more preferably 7.0 mm or more, further preferably 8.0 mm or more, further preferably 9.0 mm or more, while it is preferably 20.0 mm or less, more preferably 15.0 mm or less, still more preferably 10.0 mm or less. When the groove depth D is within the range indicated above, the advantageous effect tends to be better achieved.

The mechanism of the enhancement of the advantageous effect provided by the groove depth D within a predetermined range is not clear. Presumably, with the groove depth controlled to be within a predetermined range, the rubber strength can be reliably obtained, thereby improving abrasion resistance.

The tire including a tread and the side component preferably has a product of (Hc × D) of the amount Hc (parts by mass) of the hydrazide compound per 100 parts by mass of the rubber component contained in the side component rubber composition in the side component and the groove depth D (mm) of a circumferential groove on the tread of 2.5 or more and 200 or less.

The product of Hc × D is preferably 10 or more, more preferably 14 or more, still more preferably 15 or more, further preferably 18 or more, still further preferably 20 or more. The upper limit of the product of Hc × D is not limited and is preferably 150 or less, more preferably 120 or less, still more preferably 100 or less, further preferably 45 or less, particularly preferably 40 or less. When the product of Hc × D is within the range indicated above, the advantageous effect tends to be better achieved.

The mechanism of the enhancement of the advantageous effect provided by controlling the product of Hc × D to be a predetermine value is not clear. Presumably, the groove depth within a predetermined range leads to good rubber strength, and also the hydrazide compound can reduce a decrease in the strength, thereby improving durability.

An exemplary embodiment of the tire is described below with reference to drawings. The present invention is not limited to the embodiment.

In FIG. 1, the vertical direction corresponds to the radial direction of a tire 2, the horizontal direction corresponds to the axial direction of the tire 2, and the direction perpendicular to the drawing plane corresponds to the circumferential direction of the tire 2. The tire 2 is horizontally symmetrical. A tread 4 is a monolayer tread.

Although FIG. 1 shows an example of a monolayer tread 4, the tread may be a two-layer tread including a cap tread and a base tread or a three or more layer tread.

In the tire 2, each sidewall 6 extends radially substantially inwardly from an edge of the tread 4. The radially outer portion of the sidewall 6 is bonded to the tread 4. The radially inner portion of the sidewall 6 is bonded to a clinch 10. The sidewall 6 can prevent damage to a carcass 14.

In the tire 2 in FIG. 1, the sidewall 6 includes the side component rubber composition. Specifically, the sidewall 6 includes a sidewall rubber composition containing a rubber component including an isoprene-based rubber and at least one of polybutadiene rubber or styrene-butadiene rubber, carbon black including recycled carbon black, and a hydrazide compound, the sidewall rubber composition having a ratio (Cc/Ic) of the amount Cc of the carbon black per 100 parts by mass of the rubber component to the amount Ic of the isoprene-based rubber based on 100% by mass of the rubber component of higher than 0.8.

In the tire 2 in FIG. 1, the largest thickness Ts of the sidewall 6 is the largest value among the thicknesses of each sidewall 6 at points on the surface of the sidewall 6. In the example in FIG. 1, Ts denotes the largest thickness.

In FIG. 1, each wing 8 is located between the tread 4 and the sidewall 6. The wing 8 binds to both the tread 4 and sidewall 6.

Each clinch 10 is located radially substantially inwardly of the sidewall 6 and has at least one part to contact a rim.

The carcass 14 includes a carcass ply 36. Although the carcass 14 in the tire 2 includes one carcass ply 36, it may include two or more carcass plies.

In the tire 2, the carcass ply 36 extends between the bead cores 32 on opposite sides along the tread 4 and the sidewalls 6. The carcass ply 36 is folded around each bead core 32 from the inside to the outside in the axial direction. Due to the folding, the carcass ply 36 is provided with a main portion 36a and a pair of folded portions 36b. Namely, the carcass ply 36 includes the main portion 36a and a pair of the folded portions 36b.

Each bead core 32 includes a bead apex 34 radially outwardly extending from the bead core 32. The bead core 32 has a ring shape and desirably contains a wound non-stretchable wire. The bead apex 34 is radially outwardly tapered.

Though not shown, the carcass ply 36 desirably consists of a large number of parallel cords and a topping rubber. The absolute value of the angle of each cord with respect to the equator CL is suitably from 75° to 90°. In other words, the carcass 14 preferably has a radial structure.

In FIG. 1, a belt layer 16 is located radially inwardly of the tread 4. The belt layer 16 is stacked on the carcass 14. The belt layer 16 reinforces the carcass 14. In the tire 2 in FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times but preferably not more than 0.9 times the cross-sectional width of the tire 2.

The interior layer 38 and the exterior layer 40 each desirably include a parallel array of single-strand steel cords (steel monofilaments) and a topping rubber (coating rubber). In other words, the belt layer 16 contains a parallel array of steel monofilaments.

In FIG. 1, the band 18 is located radially outwardly of the belt layer 16. The band 18 has an axial width that is equal to that of the belt layer 16. The band 18 may have a larger width than the belt layer 16.

Though not shown, the band 18 desirably consists of a cord and a topping rubber. The cord is spirally wound. This band 18 has what is called a jointless structure. The cord extends substantially in the circumferential direction. The angle of the cord with respect to the circumferential direction is preferably 5° or smaller or even 2° or smaller. The cord restricts the belt layer 16, thereby inhibiting lifting of the belt layer 16.

The belt layer 16 and the band 18 in FIG. 1 constitute a reinforcing layer. The reinforcing layer may consist only of the belt layer 16.

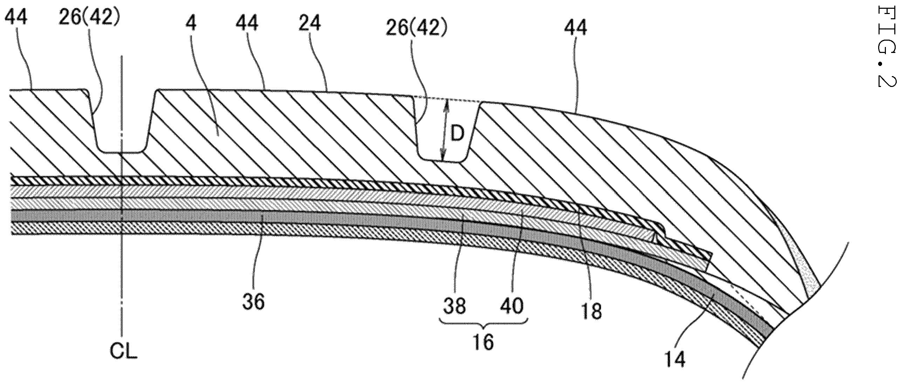

FIG. 2 is an enlarged view showing the tread 4 and its vicinity in FIG. 1.

The tire in FIG. 2 is the tire 2 having a groove 26 on the tire equator (on CL).

An innerliner 20 is located inwardly of the carcass 14. The innerliner 20 is bonded to the inner surface of the carcass 14. A typical substrate rubber of the innerliner 20 is butyl rubber or a halogenated butyl rubber. The innerliner 20 maintains the inner pressure of the tire 20.

Each chafer 22 is located near the bead 12. In this embodiment, the chafer 22 desirably consists of a rubber and a fabric impregnated with the rubber. The chafer 22 may be integrated with the clinch 10.

In the tire 2, the tread 4 has main grooves 42 as grooves 26. As shown in FIG. 1, the tread 4 has a plurality of, specifically three, main grooves 42 engraved thereon. The main grooves 42 are spaced apart in the axis direction. Four ribs 44 extending in the circumferential direction are defined by the three main grooves 42 engraved on the tread 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the road surface is wet.

In FIG. 2, D represents the groove depth of the main circumferential groove 42 on the tread 4.

In the tire 2, the amount Cc of the carbon black per 100 parts by mass of the rubber component, the amount Ic of the isoprene-based rubber based on 100% by mass of the rubber component, and the amount Hc of the hydrazide compound per 100 parts by mass of the rubber component, which are contained in the sidewall rubber composition in the sidewall 6, and the largest thickness Ts of the sidewall 6 and the groove depth D of a circumferential groove are desirably within the respective ranges indicated above. Further, the ratio Cc/Hc, the product of Hc × T, and the product Hc × D are desirably within the respective ranges indicated above.

### EXAMPLES

Examples (working examples) which are considered preferable to implement the present invention are described below although the scope of the disclosure is not limited to the examples.

Chemicals used in the production of tires are listed below. If necessary, the chemicals are purified by usual techniques.
NR: TSR20
BR: BR150B (cis content: 97% by mass) available from UBE Corporation
SBR: SBR1502 (styrene content: 23.5% by mass) available from Sumitomo Chemical Co., Ltd.
Carbon black: DIABLACK N550 (N₂SA: 40 m²/g) available from Mitsubishi Chemical Corporation
Recycled carbon black: SS550 (recovered carbon black obtained through pyrolysis of tires) available from Streble Green Carbon
Silica: ULTRASIL VN3 (N₂SA: 175 m²/g) available from Evonik
Silane coupling agent: Si266 (bis(3-triethoxysilylpropyl)disulfide) available from Evonik
Oil: Diana Process NH-70S (aromatic process oil) available from Idemitsu Kosan Co., Ltd.
Hydrazide compound: a compound represented by the formula (1-1) (R¹¹: a methyl group, R¹²: an isobutyl group)
Wax: Ozoace 0355 available from Nippon Seiro Co., Ltd.
Antioxidant 1: NOCCRAC 6C (N-phenyl-N'-(1,3-dimethylbutyl)-p-phenylenediamine) available from Ouchi Shinko Chemical Industrial Co., Ltd.
Antioxidant 2: NOCCRAC 224 (poly(2,2,4-trimethyl-1,2-dihydroquinoline)) available from Ouchi Shinko Chemical Industrial Co., Ltd.
Stearic acid: a product of NOF Corporation
Zinc oxide: zinc oxide #3 available from HakusuiTech Co., Ltd.
Sulfur: powdered sulfur available from Tsurumi Chemical Industry Co., Ltd.
Vulcanization accelerator: NOCCELER CZ-G (N-cyclohexyl-2-benzothiazolylsulfenamide) available from Ouchi Shinko Chemical Industrial Co., Ltd.

### <Production of test tire>

According to the formulation in Table 1, the materials other than the sulfur and the vulcanization accelerator are kneaded in a 1.7 L Banbury mixer (Kobe Steel, Ltd.) at 150°C for five minutes to obtain a kneaded mixture.

The sulfur and the vulcanization accelerator are added to the kneaded mixture, and they are kneaded using an open roll mill at 80°C for five minutes to obtain an unvulcanized rubber composition.

The uncross-linked rubber composition is formed into the shape of a sidewall and is then assembled with other tire components on a tire building machine to build an unvulcanized tire. The uncross-linked tire is vulcanized at 170°C for 10 minutes, whereby a test tire (size 205/55R16, a passenger car tire) is produced.

Test tires prepared according to the amounts and the specifications varied as shown in Table 1 are simulated. Table 1 shows the results calculated as described in the evaluation methods below.

The reference comparative example is as follows.

### Table 1: Comparative Example 1

### <Abrasion resistance upon collision with curb>

A No. 3 dumbbell specimen is prepared from a sample collected from the sidewall of the test tire. The specimen is subjected to tensile testing in accordance with JIS K 6251 "Rubber, vulcanized or thermoplastic -- Determination of tensile stress-strain properties" to measure the tensile strength at break (TB) and elongation at break (EB). A breaking energy (TB × EB/2) of each formulation is calculated and expressed as a breaking energy index relative to the breaking energy of the reference comparative example taken as 100. A higher index indicates better abrasion resistance upon the collision with a curb.

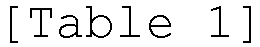

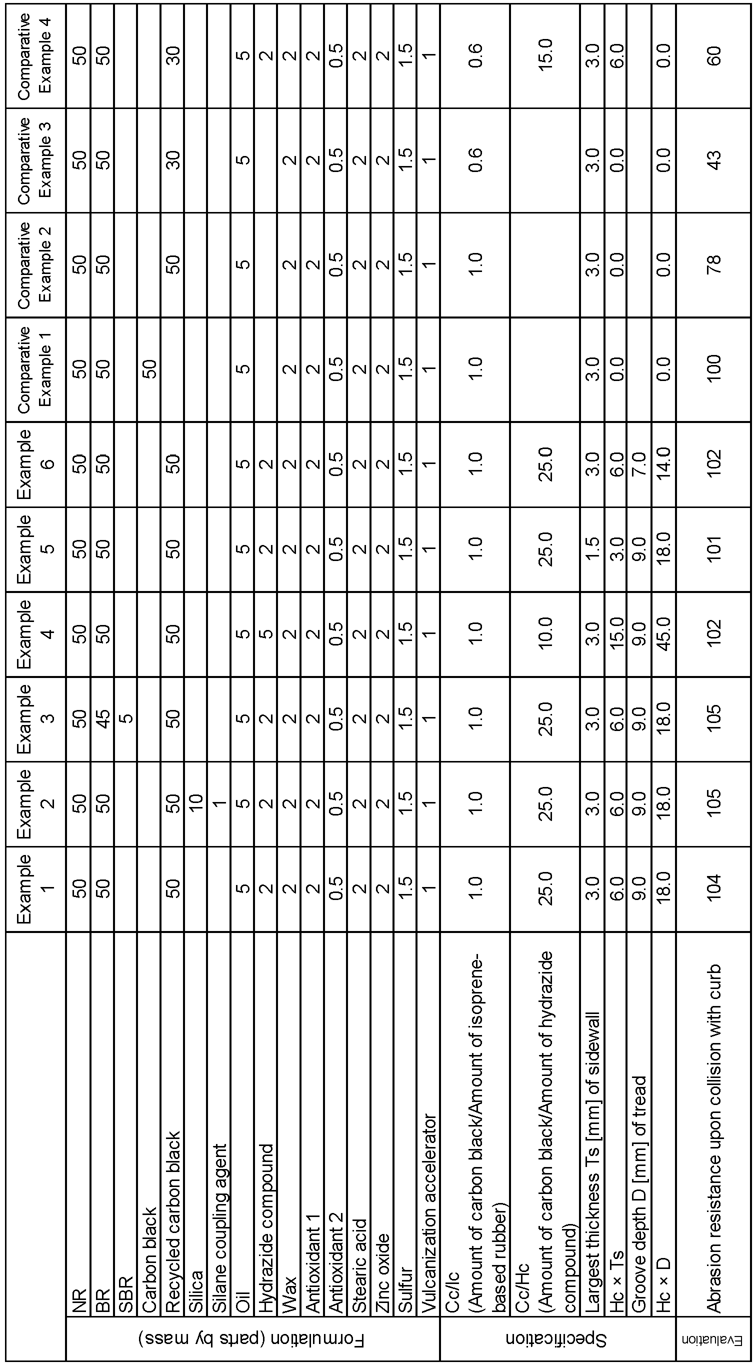

### REFERENCE SIGNS LIST

2 tire
4 tread
6 sidewall
8 wing
10 clinch
12 bead
14 carcass
16 belt layer
18 band
20 innerliner
22 chafer
24 tread surface
26 groove
32 bead core
34 bead apex
36 carcass ply
36a main portion
36b folded portion
38 interior layer
40 exterior layer
42 main groove
44 rib
CL tire equator
Ts largest thickness of sidewall
D main groove depth of circumferential main groove on tread

## Claims

1. A side component rubber composition, comprising:
a rubber component including an isoprene-based rubber and at least one of polybutadiene rubber or styrene-butadiene rubber;
carbon black including recycled carbon black; and
a hydrazide compound,
the side component rubber composition having a ratio (Cc/Ic) of an amount Cc (parts by mass) of the carbon black per 100 parts by mass of the rubber component to an amount Ic (% by mass) of the isoprene-based rubber based on 100% by mass of the rubber component of higher than 0.8.

2. The side component rubber composition according to claim 1,
wherein the ratio (Cc/Ic) is lower than 3.00.

3. The side component rubber composition according to claim 1 or 2,
wherein the amount of the isoprene-based rubber based on 100% by mass of the rubber component is 20% by mass or more and 80% by mass or less.

4. The side component rubber composition according to any one of claims 1 to 3,
wherein the amount of the polybutadiene rubber based on 100% by mass of the rubber component is 20% by mass or more and 80% by mass or less.

5. The side component rubber composition according to any one of claims 1 to 4,
wherein the amount of the styrene-butadiene rubber based on 100% by mass of the rubber component is 5% by mass or more and 80% by mass or less.

6. The side component rubber composition according to any one of claims 1 to 5,
wherein the side component rubber composition comprises silica.

7. The side component rubber composition according to any one of claims 1 to 6,
wherein the side component rubber composition comprises polybutadiene rubber and styrene-butadiene rubber.

8. The side component rubber composition according to any one of claims 1 to 7,
wherein the side component rubber composition has a ratio (Cc/Hc) of the amount Cc (parts by mass) of the carbon black per 100 parts by mass of the rubber component to an amount Hc (parts by mass) of the hydrazide compound per 100 parts by mass of the rubber component of 12.5 or higher and 100 or lower.

9. The side component rubber composition according to any one of claims 1 to 8,
wherein the hydrazide compound includes a compound represented by the following formula (1-1):

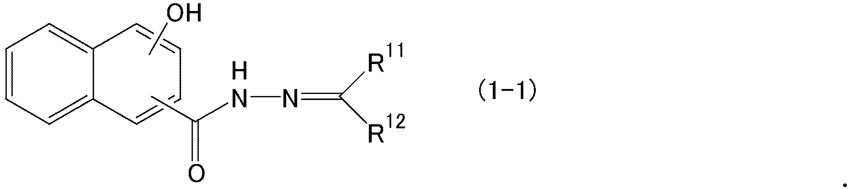

10. A tire, comprising a side component including the side component rubber composition according to any one of claims 1 to 9.

11. The tire according to claim 10,
wherein the side component has a largest thickness T of 2.0 mm or more and 5.0 mm or less.

12. The tire according to claim 10 or 11,
wherein the tire has a product of (Hc × T) of the amount Hc (parts by mass) of the hydrazide compound per 100 parts by mass of the rubber component in the side component rubber composition and the largest thickness T (mm) of the side component of 5.0 or more and 50 or less.

13. The tire according to any one of claims 10 to 12,
wherein the tire includes a tread, and
the tread has a circumferential groove with a groove depth D of 8.0 mm or more and 15.0 mm or less.

14. The tire according to any one of claims 10 to 13,
wherein the tire includes the tread, and
the tire has a product of (Hc × D) of the amount Hc (parts by mass) of the hydrazide compound per 100 parts by mass of the rubber component in the side component rubber composition and the groove depth D (mm) of the circumferential groove on the tread of 15 or more and 100 or less.
